## Europäisches Patentamt

## European Patent Office

## Office européen des brevets

(19)

(11) Veröffentlichungsnummer: **0 098 381**
**B1**

(12) **EUROPÄISCHE PATENTSCHRIFT**

(45) Veröffentlichungstag der Patentschrift:
**11.03.87**

(51) Int. Cl.⁴: **F 24 C 15/20,** B 01 D 46/44

(21) Anmeldenummer: **83105158.6**

(22) Anmeldetag: **25.05.83**

(54) **Farbindikator.**

(30) Priorität: **09.07.82 DE 3225695**

(43) Veröffentlichungstag der Anmeldung:
**18.01.84 Patentblatt 84/3**

(45) Bekanntmachung des Hinweises auf die Patenterteilung:
**11.03.87 Patentblatt 87/11**

(84) Benannte Vertragsstaaten:
**AT BE CH DE FR GB IT LI NL SE**

(56) Entgegenhaltungen:
**DE - A - 2 514 735**
**DE - B - 2 708 435**
**FR - A - 2 428 457**

(73) Patentinhaber: **Gruen, Udo, Breslauer Strasse 44c,
D-7500 Karlsruhe 1 (DE)**

(72) Erfinder: **Gruen, Udo, Breslauer Strasse 44c,
D-7500 Karlsruhe 1 (DE)**

(74) Vertreter: **Trappenberg, Hans, Wendtstrasse 1,
D-7500 Karlsruhe 21 (DE)**

## Beschreibung

Die Erfindung betrifft eine Dunstabzugshaube mit oberhalb einer Siebplatte eingefügter Filtermatte sowie einen Farbindikator, der durch Farbumschlag die Unbrauchbarkeit, insbesondere die Fettsättigung der Filtermatte signalisiert.

Dunstabzugshauben werden insbesondere in Haushaltungen eingesetzt und sollen im Betrieb die Küchendünste aus dem Raum entfernen und damit diesen Raum vor Versottung bewahren. Hierzu müssen die Filtermatten insbesondere ein gutes Rückhaltevermögen für fettige und ölige Substanzen aufweisen, trotzdem aber noch gut luftdurchlässig sein. Tatsächlich sind die heutigen Filtermatten auch in der Lage, Öl-Fettmengen bis ca. 600 g/qm zurückzuhalten. Dies hat einerseits den Vorteil, dass die Filtermatten nicht allzu oft gewechselt werden müssen, jedoch auch den Nachteil, dass die Brandlast durch die grosse angesammelte Öl-Fettmenge entsprechend ansteigt. Als weiterer Nachteil kommt hinzu, dass das gespeicherte Öl beziehungsweise Fett einem kontinuierlichen Fettverderb durch Oxydation und Hydrolyse unterworfen ist und sich auch in verhältnismässig kurzer Zeit ein mikrobiologischer Verderb unter Bildung von toxischen Substanzen einstellen kann.

Die beschriebenen Nachteile machen es daher unumgänglich, dass derartige Filtermatten stets dann zu wechseln sind, wenn sie bis zu einem bestimmten Masse mit Öl oder Fett gesättigt sind oder auch dann schon, wenn geringere Öl- und Fettspuren, eventuell unter Bildung eines unangenehmen Geruches, in Verderbnis übergehen oder sich gar toxische Stoffe durch das Ansiedeln von Bakterien und Schimmelpilzen gebildet haben.

Zum Stande der Technik gehört ein Verfahren zum Nachweis der Fettsättigung von Filtermaterial für derartige Dunstabzugshauben, nach dem eine fett- und/oder öllösliche Substanz auf der nicht sichtbaren Rückseite des Filtermaterials aufgebracht wird, die bei Sättigung des Filters auf der Vorderseite eine Farbänderung bewirkt. Damit dieser Farbumschlag erkannt werden kann, muss also die Unterseite der Filtermatte durch die dort befindliche Siebplatte hindurch betrachtet und festgestellt werden, ob sich die Farbe der Filtermatte verändert hat. Dadurch, dass zum Erkennen des Farbumschlags lediglich die kleinen durch die Öffnungen der Siebplatte freigelassenen Flächen der Filtermatten betrachtet werden können und zudem die Filtermatte innerhalb der Dunstabzugshaube, also oberhalb dieser Siebplatte, vielfach im Dunkeln liegt, der Farbumschlag auch nicht so gravierend ist, dass er sofort erkennbar ist, ist er recht schwierig festzustellen. Des öfteren wird daher trotz dieser Signalisierung das rechtzeitige Wechseln der Filtermatten unterlassen.

Festzuhalten ist auch, dass diese Art der Signalisierung nur dann ansprechen kann, wenn die Filtermatte über ihren gesamten Querschnitt mit Öl oder Fett gesättigt ist, da erst dann die fett- und/oder öllösliche farbgebende Substanz gelöst wird und durch die Filtermatte hindurchdringen kann. Verstreicht dann bis zum tatsächlichen Wechseln der Filtermatte aus den oben angeführten Gründen noch eine gewisse Zeit, so ist sicherlich weit die zulässige Brandlast überschritten, und es dürfte dann auch das Fett zum grössten Teil in Verderbnis übergegangen sein. Eine Signalisierung des Fettverderbs ist jedoch bei diesem bekannten Verfahren nicht vorgesehen.

Eine Verbesserung hinsichtlich des Erkennens des Farbumschlages ist in der DE-A 2 514 735 beschrieben. Hier ist, statt die fett- und/oder öllösliche Substanz auf der Rückseite der Filtermatte anzubringen, ein Indikatorpapier 3 vorgesehen, das ebenfalls auf der Rückseite des Fettfilters angebracht wird. Durch eine in der Dunstabzugshaube vorgesehene Handhabe kann dieses Indikatorpapier zum Betrachten verschoben oder auch aus der Dunstabzugshaube entnommen werden. Durch diese Vorrichtung allerdings wird der grundsätzliche Mangel dieser Signalisierung, der oben bereits beschrieben ist, nicht behoben.

Bekannt ist auch eine Filtermatte, die auf ihrer Vorderseite, also der durch die Siebplatte hindurch sichtbaren Seite, ganz oder teilweise mit einem Gemisch aus mindestens zwei ineinander unlöslichen Komponenten beschichtet ist, wovon die eine fett- und/oder öllöslich ist und eine Farbe aufweist, die sich deutlich von der Farbe der Filtermatte und/oder der anderen Komponente unterscheidet, wobei diese andere Komponente nicht fett- und/oder öllöslich ist. Bei dieser Art Signalisierung beginnt das Übertreten des Farbstoffes bereits bei Aufnahme der ersten Öl- oder Fettspuren und verdichtet sich immer mehr, bis schliesslich eine Grenze erreicht ist, bei der die Filtermatte auszuwechseln ist. Im Gegensatz also zu dem zuvor beschriebenen Verfahren findet hier ein kontinuierlich mit der Öl- beziehungsweise Fettaufnahme fortschreitender Prozess statt, wobei es dem Benutzer überlassen bleibt, festzustellen, exakt bei welchem Farbton die Grenze des Aufnahmevermögens der Filtermatte für Öl und Fett erreicht ist. Trotzdem ist diese Art Signalisierung vorzuziehen, da diese so präparierten Filtermatten eher früher als zu spät ausgewechselt werden, die nachteiligen Folgen eines zu späten Austausches also seltener eintreten.

Ausser der schon erwähnten schlechten Erkennbarkeit ist auch hier wiederum keine Signalisierung des Fettverderbs gegeben, so dass über eine längere Zeit in der Filtermatte eingelagerte Öl- und Fettreste nicht zu einer Signalisierung und damit zum Austausch der Filtermatte führen, obwohl eine solche Filtermatte auf alle Fälle aus hygienischen Gründen gewechselt werden müsste.

Aufgabe der Erfindung ist es, einen Farbindikator für eine derartige Dunstabzugshaube anzugeben, mit dem es möglich ist, generell die Unbrauchbarkeit, insbesondere die Fettsättigung der Filtermatte zu signalisieren wie auch den Zustand des in der Filtermatte gespeicherten Fettes. Dabei soll dieses Signalisieren so markant sein, dass es auf keinen Fall zu übersehen ist.

Erreicht wird dies nach der Erfindung durch eine Signalplatte, die zumindest teilweise mit Indikatorsubstanz versehen und unterhalb der Siebplatte anbringbar ist.

Nicht mehr also wie bei den bekannten Filtermatten werden diese selbst getränkt oder mit Indikatorsubstanzen versehen, sondern es wird an der Siebplatte eine Signalplatte angebracht, die gleichlaufend mit der oberhalb der Siebplatte angeordneten Filtermatte, da sie vom gleichen Luftstrom durchströmt oder angeströmt wird, verschmutzt wird beziehungsweise sich mit Öl oder Fett vollsaugt. Dadurch ist es nicht mehr notwendig, mühsam durch die Öffnungen der Siebplatte hindurch einen eventuellen Farbumschlag zu erkennen, sondern ein Farbumschlag wird sofort ohne besondere Manipulationen erkennbar. Damit ist aber auch gewährleistet, dass die Filtermatte stets dann gewechselt wird, wenn einer der Indikatoren anspricht.

Da der Indikator nach der Erfindung nicht direkt auf die Filtermatte aufgebracht, sondern ein separater Farbindikator an der Siebplatte angebracht wird, können nun auch regenerierbare, also auswaschbare Filtermatten Verwendung finden. Dies erhöht selbstverständlich ausserordentlich die Wirtschaftlichkeit der Verwendung solcher Filtermatten.

Die Indikatorsubstanzen können oberhalb oder unterhalb der Signalplatte aufgebracht sein, oder es kann auch die gesammelte Signalplatte mit Indikatorsubstanz getränkt sein. Da nur die verhältnismässig kleine Signalplatte mit Indikatorsubstanz zu versehen ist, kann zudem ein verhältnismässig teurer, jedoch zuverlässig und präzise arbeitender Indikator verwendet werden, was bei der Beschichtung der gesamten Filtermatte aus wirtschaftlichen Gründen nicht möglich ist. Zudem können nunmehr mehrere, unterschiedliche Farbumschläge bewirkende Indikatorsubstanzen vorgesehen werden, wobei neben der Signalisierung der Fettsättigung zumindest eine Indikatorsubstanz vorgesehen sein sollte, die den Fettverderb auf der Basis eines Redoxindikators signalisiert. Eine weitere Indikatorsubstanz sollte den mikrobiologischen Fettverderb, also das Vorhandensein von Schimmelpilzen oder die unzulässig hohe Anzahl von Bakterien signalisieren. Sehr zweckmässig ist auch der Einsatz von Indikatoren, die den sich ändernden pH-Wert durch einen Farbumschlag signalisieren. Derartige Indikatoren sind in grosser Zahl bekannt und weisen im allgemeinen einen markanten Farbumschlag auf.

Um auch die Ausbreitung des Öls beziehungsweise Fetts innerhalb der in der Dunstabzugshaube angeordneten Filtermatte in der Signalplatte nachzuvollziehen, können Partien der Signalplatte an der Unterseite mit einer transparenten Folie abgedeckt sein. Erst dann, wenn durch die Wanderung des Öls beziehungsweise des Fetts innerhalb der Signalplatte diese Bereiche erreicht werden, kann dort befindliche Indikatorsubstanz umschlagen beziehungsweise anzeigen, dass das Fett beziehungsweise Öl auch in entfernte Filtermattenbereiche gewandert ist. Hierbei kann die transparente Folie auch eingefärbt sein, damit der Farbumschlag durch diese eingefärbte Folie hindurch besser erkennbar ist.

Die Signalplatte kann aus einem beliebigen, saugfähigen Material, beispielsweise saugfähigem Zellstoff beziehungsweise Papier hergestellt sein. Je nach dem Indikator ist es hierbei nicht unbedingt notwendig, dass die Signalplatte durchströmt wird; es genügt gegebenenfalls auch ein Anströmen dieses Materials, wodurch sich ja auch zumindest der Fettanteil des aufschlagenden Dunstes in dem Signalplattenmaterial fängt und nach gewisser Sättigung den gewünschten Farbumschlag herbeiführt. Die Sättigung der Filtermatte kann hierbei durch Auswahl des Signalplattenmaterials, durch dessen Dicke, gegebenenfalls auch durch dessen Abdeckung beeinflusst werden, ebenso selbstverständlich wie durch die Wahl des Indikators. Vereinfacht werden kann die Einstellung des Farbindikators dadurch, dass das Material der Signalplatte das gleiche ist wie dasjenige der Filtermatte, so dass in dieser Signalplatte auch exakt die gleichen Verhältnisse wie in der Filtermatte herrschen.

Statt die Indikatorsubstanzen direkt auf die Signalplatte aufzutragen, kann auch auf die Unter- und/oder Oberseite der Signalplatte mit der Indikatorsubstanz getränktes Papier aufgelegt sein. Dies ist insbesonders dann zweckmässig, wenn die Signalplatte schlecht zu bedrucken oder zu tränken ist.

Eine sehr einfach anzuwendende Vorrichtung zur Anwendung des Farbindikators nach der Erfindung ist dadurch gegeben, dass die Signalplatte in einen aus transparentem Kunststoff oder aus Kunststoffolie gefertigen Napf einlegbar ist, dessen Boden mit grossflächigen Durchströmöffnungen versehen ist und der eine zentrische Öffnung zum Einfügen eines Befestigungsmittels aufweist. Zweckmässigerweise wird als Befestigungsmittel eine Befestigungsschraube mit einem Holzgewinde verwendet, die in das Material der Filtermatte einzuschrauben ist; hierbei kann die Befestigungsschraube mit einem Rändelkopf zum leichten Einschrauben versehen sein. Statt der Holzschraube kann auch eine mit einer Endschlaufe versehene Schraubenfeder, die ebenso wie die Holzschraube in das Filtermattenmaterial eingedreht werden kann, zum Befestigen des Napfes dienen. Diese Befestigung ist äusserst preiswert, sowohl hinsichtlich des Materials und der Herstellung, wie auch hinsichtlich der Verpackungsmöglichkeit, zusammen mit dem eigentlichen Farbindikator. Als Befestigungsmittel kann auch ein Splint dienen, der allerdings in aller Regel nicht in das Filtermattenmaterial eingestochen, sondern an der Innenseite der Siebplatte umgebogen wird.

Anstatt lediglich einen Napf vorzusehen, in den verbraucherseitig die Signalplatte einzulegen ist, kann der Farbindikator auch so konfektioniert werden, dass der Napf mit der eingelegten Signalplatte oberseitig durch einen Deckel, der ebenfalls Durchströmöffnungen aufweist, verschliessbar ist und dass Napf und Deckel durch eine zentrale Hohlniet verbunden werden. Eine derartige Vorrichtung kann auf einfachste Weise und auch narrensicher an der Dunstabzugshaube befestigt werden.

Weiter ist es selbstverständlich auch möglich, die Signalplatte auf der Rückseite mit einem Kleber zu beschichten und diese Platte sodann auf der Siebplatte der Dunstabzugshaube aufzukleben. Soll die Signalplatte von dem Dunst durchströmt werden, so kann der Kleber auch nur punktförmig aufgebracht sein, um dieses Durchströmen nicht zu behindern.

Auch ist es schliesslich möglich, die Signalplatte auf der Schauseite mit einem markanten Farbaufdruck zu versehen, der der «Unverbraucht»-Farbe und/oder der umgeschlagenen Farbe des Indikators entspricht, um somit das Erkennen der Unbrauchbarkeit der Filtermatte zu erleichtern.

Auf der Zeichnung ist ein Ausführungsbeispiel eines solchen Farbindikators schematisch dargestellt, und zwar zeigen:

Fig. 1 einen Querschnitt durch einen an einer Dunstabzugshaube angebrachten Indikator,

Fig. 2 einen Querschnitt durch eine veränderte Ausführungsform,

Fig. 3 eine Draufsicht auf den Indikator nach Fig. 2,

Fig. 4 eine Feder zum Befestigen des Indikators und

Fig. 5 eine aufklebbare Signalplatte.

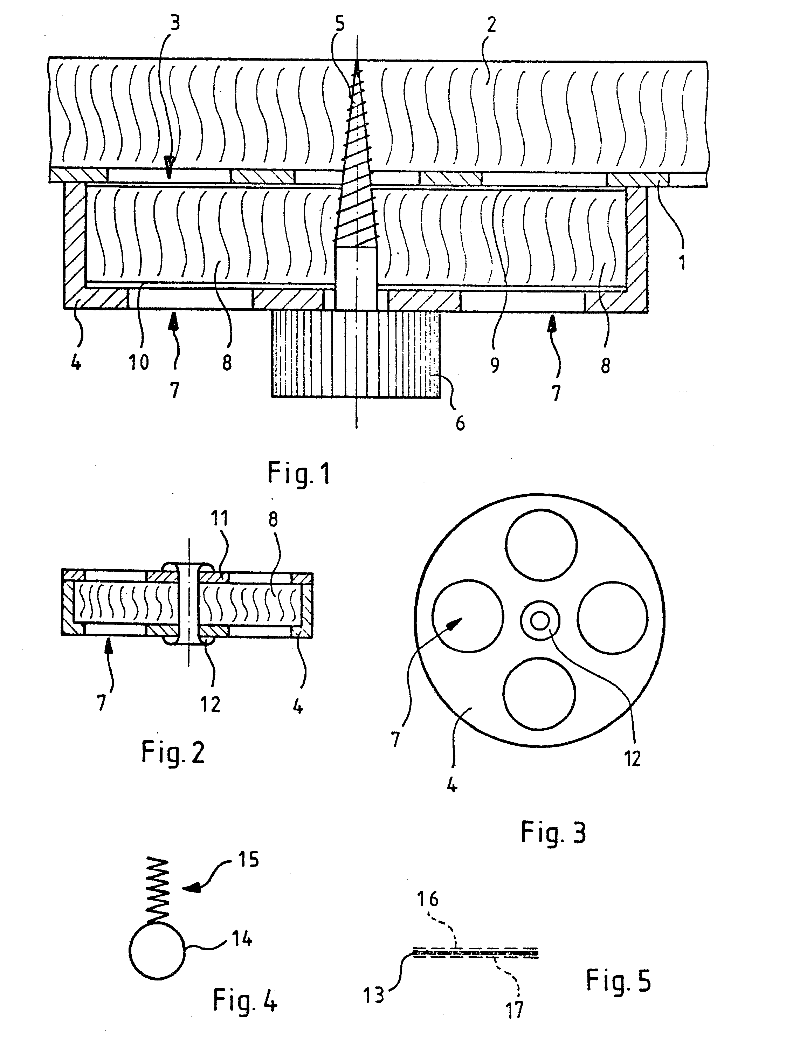

Oberhalb einer Siebplatte 1 befindet sich eine Filtermatte 2, die die unerwünschten Stoffe beim Durchströmen der Filtermatte über Öffnungen 3 in der Siebplatte 1 zurückhalten soll. Unterhalb dieser Siebplatte 1, vorzugsweise zentral an der Dunstabzugshaube, ist ein Napf 4 aus transparentem Material mittels einer Holzschraube 5, die in das Material der Filtermatte 2 eingeschraubt ist, angeordnet. Die Holzschraube 5 ist mit einem Rändelkopf 6 zum einfachen manuellen Eindrehen der Schraube 5 in das Filtermaterial 2 ausgeführt. Statt der Holzschraube 5 kann auch eine Schraubenfeder 15 (Fig. 4) Verwendung finden, die einseitig mit einer Endschlaufe 14 versehen ist. Diese Schraubenfeder 15 kann ebenso wie die Holzschraube 5 in das Filtermaterial 2 eingeschraubt werden.

Der Napf 4 weist ebenso wie die Siebplatte grossflächige Durchströmöffnungen 7 auf, so dass eine in dem Napf befindliche Signalplatte 8 ebenso durchströmt wird wie die eigentliche Filtermatte 2. Ober- und unterhalb der Signalplatte 8, also einerseits an der Siebplatte 1 anliegend, andererseits auf dem Boden des Napfes aufliegend, ist je ein mit Indikatorsubstanz getränktes Papier 9, 10 vorgesehen, wobei das obere Papier 9 insbesondere eine öl- und fettlösliche Farbsubstanz aufweisen soll, während die Tränkung des am Boden des Napfes 5 befindlichen Papiers 10 insbesondere die Fettverderbnis signalisieren soll. Beide Papiere 9, 10 weisen selbstverständlich entsprechend grossflächige Öffnungen auf, so dass die Durchströmung durch die Signalplatte 8 und durch den Filter 2 hindurch nicht gestört ist.

Der Zeitpunkt der Signalplattensättigung mit Öl oder Fett kann nun dadurch beeinflusst werden, dass mehr oder weniger grosse Partien der Signalplatte 8 abgedeckt werden oder auch dadurch, dass die Indikatorsubstanzen mehr oder weniger weit von den Rändern der abdeckenden Folie entfernt angeordnet sind. Ausserdem ist die Signalisierung der Fettsättigung auch noch durch die Dicke der Signalplatte 8 beeinflussbar.

Hat einer der Indikatoren umgeschlagen, so ist dies unschwer durch den transparenten Kunststoff des Napfes 4 erkennbar. Diese Erkennbarkeit kann noch durch eine entsprechende Einfärbung des Napfmaterials verbessert werden. Es kann dann nach Einlegen einer neuen Filtermatte 2 oder nach Reinigen dieser Filtermatte eine neue Signalplatte 8 mit entsprechenden Indikatorpapieren 9, 10 in den Napf 4 eingelegt werden, wodurch der Indikator nach der Erfindung wieder funktionsbereit ist.

Bei der Ausführung des Farbindikators nach den Fig. 2 und 3 ist oberhalb des Napfes 4 ein abschliessender Deckel 11 vorgesehen, der durch eine Hohlniet 12 auf den oberen Rand des Napfes 4 gepresst wird. Es ergibt sich somit eine leicht manipulierbare Einheit, die gut verpackungsfähig ist und unschwer durch die oben angeführte Schraube 5 beziehungsweise die Feder 15 funktionsgerecht am Dunstfilter befestigt werden kann.

Eine weitere Möglichkeit zeigt die Fig. 5. Hier ist eine Signalplatte 13 vorgesehen, die einseitig mit Kleber 16 (gestrichelt gezeichnet) beschichtet und andererseits mit einem Indikatorbelag 17 versehen ist. Dieser Farbindikator kann direkt mit seiner Kleberschicht auf die Siebplatte 1 der Dunstabzugshaube aufgeklebt werden, wobei die Signalplatte 13 durchströmt oder lediglich von dem Dunst beaufschlagt werden kann. Die Signalplatte 13 kann hierbei etwa münzengross sein oder auch in Form von Bändern oder Streifen etc. ausgeführt werden.

**Patentansprüche**

1. Dunstabzugshaube mit oberhalb einer Siebplatte eingefügter Filtermatte sowie einem Farbindikator, der durch Farbumschlag die Unbrauchbarkeit, insbesondere die Fettsättigung der Filtermatte signalisiert, gekennzeichnet durch eine Signalplatte (8), die zumindest teilweise mit Indikatorsubstanz versehen und unterhalb der Siebplatte (1) angebracht ist.

2. Dunstabzugshaube nach Anspruch 1, dadurch gekennzeichnet, dass zumindest unterhalb der Partien der Signalplatte (8), die mit Indikatorsubstanz versehen ist, eine abdeckende transparente, farblose oder eingefärbte Folie vorgesehen ist.

3. Dunstabzugshaube nach Anspruch 1 oder 2, dadurch gekennzeichnet, dass mehrere auf unterschiedlichen Reaktionen beruhende, vorzugsweise unterschiedliche Farbumschläge bewirkende Indikatorsubstanzen vorgesehen sind.

4. Dunstabzushaube nach Anspruch 3, dadurch gekennzeichnet, dass zumindest eine Indikatorsubstanz den Fettverderb auf der Basis eines Redoxindikators, eine Indikatorsubstanz den mikrobiologischen Fettverderb und eine Indikatorsubstanz die hydrolytisch (enzymatisch) bedingte pH-Wert-Änderung signalisiert.

5. Dunstabzugshaube nach einem oder mehreren der vorhergehenden Ansprüche, dadurch gekennzeichnet, dass auf der Unter- und/oder der Oberseite der Signalplatte (8) ein mit der (den) Indikatorsubstanz(en) getränktes Papier (9, 10) aufgelegt ist.

6. Dunstabzugshaube nach Anspruch 1, dadurch gekennzeichnet, dass die Signalplatte (8) in einen aus transparentem Kunststoff oder aus Kunststofffolie gefertigten Napf (4) einlegbar ist, dessen Boden mit grossflächigen Durchströmöffnungen (7) versehen ist, dass der Napf (4) oberseitig durch einen Deckel (11) mit Durchströmöffnungen (7) abgeschlossen und der Napf (4) und der Deckel (11) unter Einschluss der Signalplatte (8) und gegebenenfalls der getränkten Papiere (9, 10) mittels einer Hohlniet zum Einfügen eines Befestigungsmittels verbunden ist.

7. Dunstabzugshaube nach Anspruch 6, dadurch gekennzeichnet, dass das Befestigungsmittel eine Befestigungsschraube (5) ist, die ein Holzgewinde aufweist und mit einem Rändelkopf (6) versehen ist oder, dass die Befestigungsschraube (5) eine mit einer Endschlaufe (14) versehene Schraubenfeder (15) ist.

8. Dunstabzugshaube nach Anspruch 5, dadurch gekennzeichnet, dass das Befestigungsmittel eine in die Öffnungen der Siebplatte (1) einsteckbarer Splint ist.

9. Dunstabzugshaube nach einem oder mehreren der vorhergehenden Ansprüche, dadurch gekennzeichnet, dass die Signalplatte (8) ein Filtermattenstück, vorzugsweise der in der Dunstabzugshaube eingefügten Filtermatte ist.

10. Dunstabzugshaube nach einem oder mehreren der vorhergehenden Ansprüche, dadurch gekennzeichnet, dass die Signalplatte (8) einseitig mit Kleber (16) beschichtet ist.

11. Dunstabzugshaube nach einem oder mehreren der vorhergehenden Ansprüche, dadurch gekennzeichnet, dass die Signalplatte (8) mit einem markanten Farbaufdruck, der der «Unverbraucht»-Farbe und/oder der umgeschlagenen Farbe des Indikators entspricht, versehen ist.

**Claims**

1. A fumes extractor hood having a filter mat arranged above a sieve plate and a colour indicator which by a change in colour signals unserviceability and in particular saturation with fat of the filter mat characterised by a signal plate (8) which is at least partially provided with indicator substance and which is disposed beneath the sieve plate (1).

2. An extractor hood according to claim 1 characterised in that a covering transparent, colourless or coloured foil is provided at least beneath the portions of the signal plate (8) which are provided with indicator substance.

3. An extractor hood according to claim 1 or claim 2 characterised in that there are provided a plurality of indicator substances which are based on different reactions and which preferably produce different colour changes.

4. An extractor hood according to claim 3 characterised in that at least one indicator substance signals fat damage on the basis of a redox indicator, one indicator substance signals microbiological fat damage and one indicator substance signals the hydrolytically (enzymatically) caused change in pH-value.

5. An extractor hood according to one or more of the preceding claims characterised in that a paper (9, 10) impregnated with the indicator substance or substances is laid on the underside and/or the top side of the signal plate (8).

6. An extractor hood according to claim 1 characterised in that the signal plate (8) can be fitted into a bowl (4) which is made from transparent plastics material or plastics foil and the bottom of which is provided with through-flow openings (7) of large area, that the bowl (4) is closed at its top by a cover (11) with through-flow openings (7) and the bowl (4) and the cover (11) are connected by means of a hollow rivet for the insertion of a fixing means, thereby enclosing the signal plate (8) and possibly the impregnated papers (9, 10).

7. An extractor hood according to claim 6 characterised in that the fixing means is a fixing screw (5) which has a wood screwthread and which is provided with a knurled head (6) or that the fixing screw (5) is a coil spring (15) provided with an end loop (14).

8. An extractor hood according to claim 6 characterised in that the fixing means is a pin which can be inserted into the openings in the sieve plate (1).

9. An extractor hood according to one or more of the preceding claims characterised in that the signal plate (8) is a filter mat portion, preferably of the filter mat which is fitted in the extractor hood.

10. An extractor hood according to one or more of the preceding claims characterised in that the signal plate (8) is coated with adhesive (16) on one side.

11. An extractor hood according to one or more of the preceding claims characterised in that the signal plate (8) is provided with striking colour printing which corresponds to the ‹unspet› colour and/or the changed colour of the indicator.

**Revendications**

1. Hotte d'évacuation de vapeurs avec tapis filtrant adapté au-dessus d'une plaque perforée et avec indicateur de couleur qui, par virage, indique que le tapis filtrant est inutilisable, en particulier qu'il est saturé de graisse, caractérisée par une plaque de signalisation (8) qui est munie au moins en partie d'une substance indicatrice et disposée en dessous de la plaque perforée (1).

2. Hotte d'évacuation de vapeurs selon la revendication 1, caractérisée en ce qu'au moins en dessous des parties de la plaque de signalisation qui sont munies de substance indicatrice est prévue une feuille de recouvrement transparente, incolore ou teintée.

3. Hotte d'évacuation de vapeurs selon l'une des revendications 1 et 2, caractérisée en ce qu'il est prévu plusieurs substances indicatrices reposant sur des réactions différentes, de préférence provoquant des virages différents.

4. Hotte d'évacuation de vapeurs selon la revendication 3, caractérisée en ce qu'au moins une substance indicatrice signale la détérioration de la graisse sur la base d'un indicateur redox, une substance indicatrice, la détérioration microbiologique de la graisse et une substance indicatrice, la variation de pH à cause hydrolytique (enzymatique).

5. Hotte d'évacuation de vapeurs selon une ou plusieurs des revendications précédentes, caractérisée en ce que sur le côté inférieur et/ou le côté supérieur de la plaque de signalisation (8) est posé un papier (9, 10) imprégné de la ou des substances indicatrices.

6. Hotte d'évacuation de vapeurs selon la revendication 1, caractérisée en ce que la plaque de signalisation peut être insérée dans un godet (4) fabriqué en matière synthétique transparente ou en feuille de matière synthétique et dont le fond est muni d'ouvertures de passage à grande surface (7), en ce que le godet (4) est fermé du côté supérieur par un couvercle (11) muni d'ouvertures de passage (7), et en ce que le godet (4) et le couvercle (11) sont reliés entre eux, avec inclusion de la plaque de signalisation (8) et éventuellement des papiers imprégnés (9, 10), au moyen d'un rivet tubulaire pour l'adaptation d'un moyen de fixation.

7. Hotte d'évacuation de vapeurs selon la revendication 6, caractérisée en ce que le moyen de fixation est une vis de fixation (5) qui présente un filetage à bois et est munie d'une tête moletée (6), ou en ce que la vis de fixation (5) est un ressort à boudin (15) muni d'une boucle terminale (14).

8. Hotte d'évacuation de vapeurs selon la revendication 6, caractérisée en ce que le moyen de fixation est une goupille pouvant s'insérer dans les ouvertures de la plaque perforée.

9. Hotte d'évacuation de vapeurs selon une ou plusieurs des revendications précédentes, caractérisée en ce que la plaque de signalisation (8) est un morceau de tapis filtrant, de préférence du tapis filtrant adapté dans la hotte d'évacuation de vapeurs.

10. Hotte d'évacuation de vapeurs selon une ou plusieurs des revendications précédentes, caractérisée en ce que la plaque de signalisation (8) est revêtue d'adhésif (16) d'un côté.

11. Hotte d'évacuation de vapeurs selon une ou plusieurs des revendications précédentes, caractérisée en ce que la plaque de signalisation est munie d'une impression colorée marquante qui correspond à la couleur «inutilisé» et/ou à la couleur virée de l'indicateur.

Fig. 1

Fig. 2

Fig. 3

Fig. 4

Fig. 5